# EUROPEAN PATENT APPLICATION

(11) **EP 4 764 227 A1**
(43) Date of publication of application: **24.06.2026**
(21) Application number: 25214853.1
(22) Date of filing: 11.11.2025
(51) Int. Cl.: F15B 11/16, F15B 21/08, B66F 9/22, B66F 9/24, G05B 19/04

(54) **OPERATOR GROUP, ESPECIALLY FOR AN OPERATOR VEHICLE**

(30) Priority: 19.12.2024 IT 202400029256
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Casadei, Giovanni

(57) **Abstract**

Described is an operator unit, in particular for an operator vehicle, comprising:
at least one actuator (A1), which can be associated with two or more tools or equipment which are alternative to each other;
a control device (S), which is movable and can be positioned in an operating space;
a control module (U) connected to the control device and to the actuator (A1) and designed to send to the actuator (A1) a control signal whose level is a function of a position adopted by the control device (S) inside said operating space;
characterised in that:
the control module (U) is programmed with at least two control functions,
each of which relates a position adopted by the control device (S) inside said operating space with a level of the control signal;
the control module (U) is programmed with a control algorithm configured for:
receiving an identification signal which identifies a tool associated with the actuator (A1);
selecting a control function on the basis of said identification signal;
sending to the actuator (A1) a control signal obtained from the selected control function.

## Description

This invention relates to an operator unit, which is particularly suitable for installation on an operator vehicle.

More in detail, the invention relates especially, even if not exclusively, to a telescopic handler.

There are prior art telescopic handlers consisting of a vehicle provided with a frame, or "carriage," movable on wheels, of a driver's cab which houses the operator and a manoeuvring arm which can be extended for lifting and lowering a load.

In some models, the manoeuvring arm is hinged directly to the carriage, whilst other models are provided with a platform, or "turret", mounted rotatably on the carriage, which has the cab and to which the manoeuvring arm is hinged.

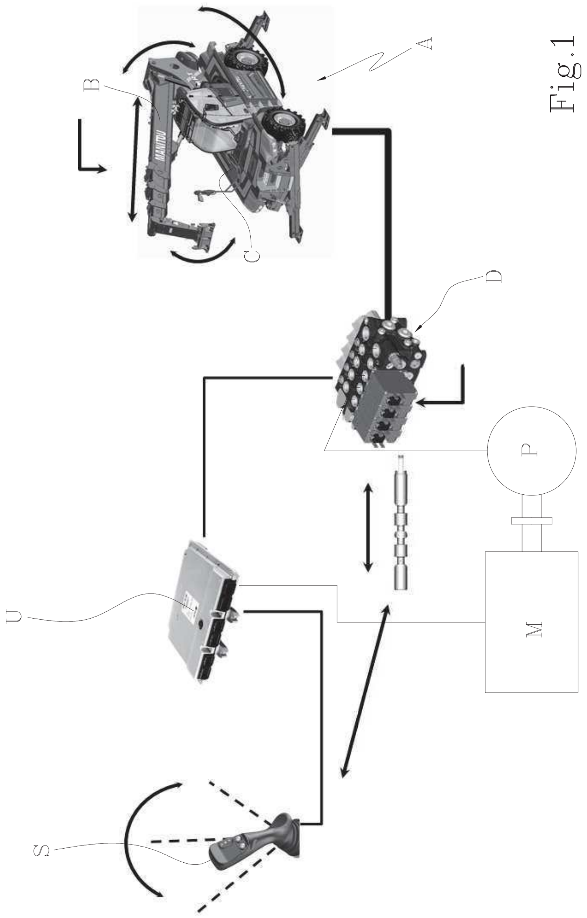

An apparatus is attached at the distal end of the arm for lifting or moving loads, such as, for example, a fork, a cage, a winch, etc. An example of an operator vehicle on which the method according to this invention can be adopted is shown schematically in Figure 1.

The actuators which allow the movement of the elements of the vehicle can be made according to various implementation technologies. A common embodiment is achieved by means of hydraulic systems, but other types, such as, for example, purely electrical actuators, are not excluded. In the case of hydraulic actuators, these are normally supplied by means of a control circuit comprising valves and distributors which direct the operating fluid to the various actuators, as a function of specific activation commands which may be automatic or imparted by an operator by means of suitable control elements.

The control circuit of the hydraulic actuators is connected to a pump which, in turn, is driven by the engine of the vehicle. Besides the operation of the pump, the latter may also be designed to produce the driving force of the vehicle, using a transmission system known in the trade.

Features and advantages of the invention are more apparent from the detailed description which follows of an embodiment of the invention according to the invention, illustrated by way of a non-limiting example in the accompanying drawings in which:
- Figure 1 shows a first schematic view of the operator unit according to the invention;

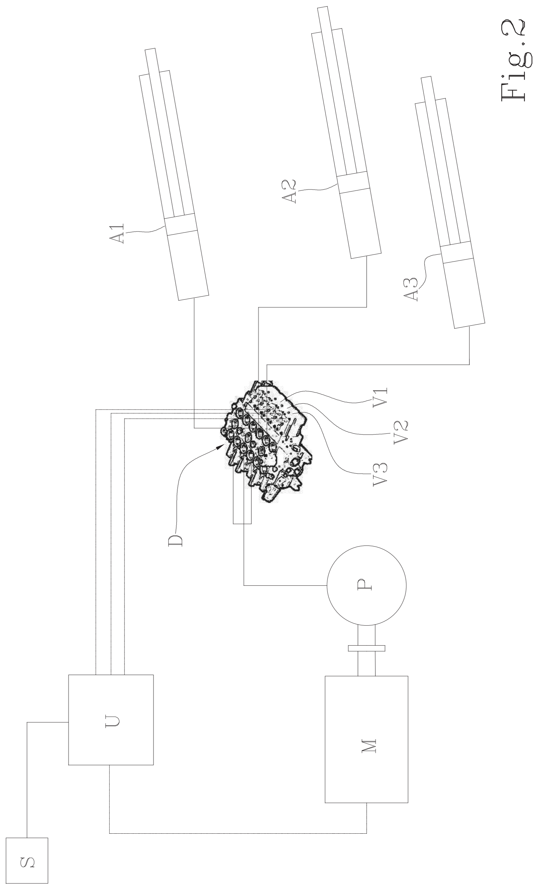

- Figure 2 shows a second schematic view of the operator unit according to the invention;

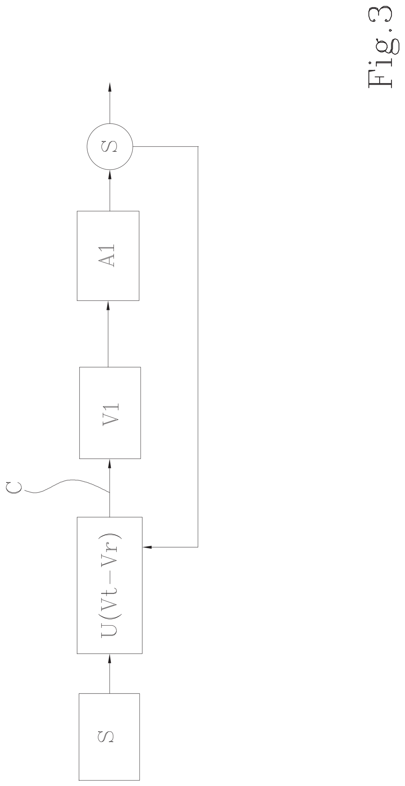

- Figure 3 is a block diagram of an embodiment of the operator unit according to the invention;
- Figures 4 to 9 show examples of different control functions applicable by the operator unit according to the invention.

The operator unit according to the invention is particularly suitable for installation on an operator vehicle (A). The vehicle comprises a motor (M), associated with a self-propelled unit, provided with means for moving on the ground such as wheels or tracks. The self-propelled unit is driven by the motor (M) by transmission systems of known type.

The vehicle comprises an operator device (B), associated with the self-propelled unit and movable relative to the latter. The operator device (B) comprises, for example, an articulated arm, rotating on a vertical plane about one or more horizontal axes of rotation. The operator device (B) may also comprise a tower, for supporting the articulated arm, rotating about a vertical axis of rotation.

The operator device (B) is actuated and controlled by an operator unit according to the invention.

The operator unit is provided with one or more hydraulic actuators for actuating movable parts of the vehicle and/or tools, such as, for example, one or more lifting arms, a system of stabilisers, a system for rotation of a tower or the like. These movable parts and tools are known in the trade and will not be described in detail.

The hydraulic actuators are supplied by means of a control circuit comprising valves and distributors which direct the operator fluid to the various actuators, as a function of specific activation commands which may be automatic or imparted by an operator by means of suitable control elements.

In the description which follows, the term "valve" means a valve of the distributor type, that is to say, a flow rate control valve, with direct electrical, electro-hydraulic, electro-mechanical control or other control, designed for adjusting the flow of a fluid along a conduit. Even if it is not explicitly stated, it will be understood that a valve comprises at least one shutter, movable in a seat between a closed position, in which it prevents the flow through the valve and, therefore, along the conduit in which the valve is installed, and at least one open position, in which it allows the flow through the valve and, therefore, along the conduit in which the valve is installed.

Indicating an open position or configuration of a valve means one of the configurations wherein the shutter is in the open position.

Indicating a closed position or configuration of a valve means a configuration wherein the shutter is in the closed position.

Indicating an opening command means an action which causes the movement of the shutter towards the open position.

Indicating a closing command means an action which causes the movement of the shutter towards the closed position.

The expression "valve with electro-mechanical actuation" means a valve provided with an electro-mechanical actuator which acts on the shutter or on a control element which determines the movement of the shutter for moving it towards the open or closed position. An elastic means acts in opposition to the electro-mechanical actuator to move the shutter in the opposite direction, in the absence of the action exerted by the electro-mechanical actuator. The control circuit of the hydraulic actuators is connected to a pump which, in turn, is driven by the engine of the vehicle. Besides the operation of the pump, the latter may also be designed to produce the driving force of the vehicle, using a transmission system known in the trade.

In the description which follows reference is made to an operator unit made using hydraulic elements; this invention is, however, also applicable to the case of the presence of a fully electric operator unit, consisting of actuators driven by electric motors or other devices powered by electricity.

In the preferred but non-limiting embodiment described below, reference will be made to an operator unit comprising at least one pump (P). The latter is, in turn, connected to one or more hydraulic actuators (A1, A2, A3...), designed for actuating movable parts and/or operator tools. The pump (P) can be operated by means of the motor (M) of the operator vehicle. Between the pump (P) and each actuator at least one flow rate control valve (V1, V2, V3...) is interposed, with electrical activation. Each flow rate control valve is designed for delivering a flow rate of operator fluid proportional to the level of a control signal. Typically, the flow rate control valves (V1, V2, V3...) are grouped together in a manifold (D), to which all the supply and discharge pipes converge for the various actuators (A1, A2, A3...). Preferably, but not necessarily, the control signals for the control valves are electrical signals and these are sent from a control module (U) to the element for adjusting the motion or directly to the actuator, if this is able to accept directly the actuation command. The level of each control signal is the intensity of an electric current, or other signal in analogue or digital format. The control valves are known in the sector. Typically, the control valves comprise a shutter or coil, movable in a sealed fashion inside a seat made inside a valve body. The shutter is movable between at least a closed position, in which it prevents the flow of the operator fluid, and at least a fully open position, in which it allows the flow of operator fluid. The shutter may also adopt any intermediate position between the fully open and closed positions. In the maximum open position of the shutter, the valve allows the flow of a maximum flow rate of operator fluid. In the intermediate positions of the shutter, the flow rate which can be transmitted by the valve is reduced, as a function of the actual position adopted by the operator.

The shutter is movable between the closed position and the open position by means of an electromechanical actuator, such as, for example, a solenoid. The position actually adopted by the shutter depends on the intensity of the current supplied to the electro-mechanical actuator which acts on the shutter. As is known in the trade, varying the flow rate supplied to a hydraulic actuator causes a variation in the speed of movement of the actuator: the greater the flow rate supplied to the actuator the greater is the speed of movement of the actuator.

The operator unit also comprises at least one control device (S), which can be operated by an operator. The control device (S) is movable and can be positioned in a predetermined operating space.

The control device (S) is connected to a control module (U), which is in turn connected to the control valves. The control module (U) is designed for sending to each to the flow rate control valve (V1, V2, V3...) a control signal the level of which is a function of a position adopted by the control device (S) inside said operating space.

This allows the flow rate which can be delivered by each flow rate control valve (V1, V2, V3...) to be adjusted and, consequently, to adjust the flow rate of operator fluid sent to each actuator, in such a way as to adjust the speed of movement.

In other words, the level of each control signal to each flow rate control valve (V1, V2, V3...) is adjustable by means of a control device (S), such as, for example, a joystick or other equivalent means, which can be operated by an operator. By actuating the control device, that is to say, by positioning the control device in a selected operating position, it is possible to adjust the speed of movement of the actuator (A1, A2, A3...) connected to the flow rate control valve (V1, V2, V3...) on which the control device acts.

According to a possible embodiment, the joystick is of the electrical type and is designed for sending input signals to a control module (U). For example, the electric joystick is connected via Can Bus to the control module (U) which is able to process the input signal coming from the joystick itself.

The control module (U) is connected to the control valves and is designed for adjusting the level of each control signal, as a function of the actions required of each actuator (A1, A2, A3...). In particular, the control module (U) is connected to the control device (S) and, as a function of the commands issued by the operator, is set up for adjusting the level of each control signal. The operator unit could be provided with further control devices, each of which can be controlled in the same ways as the control device (S).

According to a manner known in the sector, the control module (U) mentioned in this description and in the subsequent claims is indicated generically as a single unit, but in effect it may be provided with separate functional modules (memory modules or operating modules), each designed for controlling a predetermined device, such as, for example, a flow rate control valve, or cycle of operations.

In short, the control module (U) may consist of a single electronic device, programmed to perform the functions described, and the various functional modules can correspond to hardware units and/or software routines forming part of the programmed device.

Alternatively or in addition, the functions can be performed by a plurality of electronic devices on which the above-mentioned functional modules can be distributed.

The processing units may also have one or more processors for the execution of the instructions contained in the memory modules. The units and the above-mentioned functional modules may also be distributed on different computes, either locally or remotely, on the basis of the architecture of the network on which they are housed.

The control module (U) is programmed with two or more control functions.

The term "function" means a mathematical relationship which allows two variable quantities to be matched in a biunique fashion. In particular, by using each function it is possible to know the value of one of the two known variable quantities knowing the value from the other variable quantity.

Each function is structured so that it can be processed by the control module (U), in such a way that, by receiving as input the value of one of the two variable quantities, the control module (U) can provide as output the corresponding value of the other variable quantity.

For at least one of the flow rate control valves (V1) connected to one of the actuators (A1), the control module (U) is programmed with at least two control functions, each of which relates a position adopted by the control device (S) inside said operating space with a level of the control signal. In other words, each control function allows a control signal of a predetermined level to be associated with each position adopted by the control device (S). In a possible embodiment, the control signal obtained may be the desired speed for moving the actuator related to the request made using the control device (S). If there are several actuators (A1, A2, A3...), the control module (U) may be programmed with two or more control functions for some or all of the actuators or the respective control valves (V1, V2, V3...) in the case of hydraulic actuators. Reference will be made in the following description to a single actuator served by a single control valve, but the features described may be replicated for each actuator and each control valve in the case of a hydraulic actuator, but the features described may be replicated for each actuator and relative control valve or for actuators of different types such as electric actuators.

The control functions are different mathematical relationships which, for the same position of the control device, generate different signal levels. In other words, the control functions are different to each other with respect to the relationship with which they match the position adopted by the control device (S) with the corresponding level of the control signal. For example, considering a same position of the control device (S), two different control functions provide two control signals of different levels. Since the level of the control signal determines the movement of the actuator relative to the specific control signal, this means that two different control functions determine a different actuation of the actuator (A1), and therefore a different speed of the actuator (A1), even in the presence of the same position of the control device. In the case of a hydraulic actuator (A1), since the level of the control signal determines the degree of opening of the flow rate control valve (V1), this means that two different control functions determine the sending of different flow rates to the actuator (A1), and therefore a different speed of the actuator (A1), even in the presence of the same position of the control device.

The control module (U) is also programmed with a control algorithm configured for:
receiving an identification signal which identifies a tool associated with the actuator (A1);
selecting a control function on the basis of said identification signal;
sending to the actuator a control signal obtained on the basis of the selected control function. In the case of a hydraulic actuator (A1), sending to the flow rate control valve (V1) a control signal obtained from the selected control function.

Thanks to the features of the control module (U), it is possible to combine a specific control function with each tool or apparatus which can be associated with the actuator (A1), or specific condition of use of the apparatus. This allows the response of the actuator (A1) to be modified, with the same position of the control device (S), on the basis of the tool or apparatus associated with the actuator (A1). For example, by positioning the control device (S) at the end of an operating stroke, it is possible to command the actuation of a maximum speed of the actuator (A1) for a predetermined tool, and a lower speed for a different tool, so as to obtain the most effective control for each tool, also as a function of the type of work to be performed. In the case of a hydraulic actuator (A1), by positioning the control device (S) at the end of an operating stroke it is possible to command the sending of a flow rate such that it reaches the maximum operating speed of the actuator (A1) for a predetermined tool, and a flow rate such that it reaches a lower operating speed of the actuator (A1) for a different tool, so as to obtain the most effective control for each tool, also as a function of the type of work to be performed.

The recognition of the tool or apparatus associated with the actuator (A1) may be achieved by sensors of known type, such as, for example, RFID sensors, suitable for generating and transmitting to the control module (U) a signal identifying the tool or apparatus.

According to a possible embodiment, the control module (U) is programmed with at least two control functions, different to each other, for at least one tool which can be associated with the actuator (A1). In other words, for at least one of the tools which can be associated with the actuator (A1), the control module (U) is programmed with two or more control functions different to each other.

In general, the control algorithm is configured for selecting one of said two or more control functions on the basis of a predetermined operating parameter. For example, the predetermined operating parameter is a function of at least one of the following parameters:
processing to be carried out;
maximum speed at which to operate the actuator (A1);
maximum acceleration at which to operate the actuator (A1);
type of actuation controlled by a predetermined actuator (A1).

Other examples of operating parameters are: presence of an operator on board; use of one or more commands for the actuators; state of travel or stopping of the vehicle. These operating parameters can be detected by means of prior art sensors, connected to the control module (U).

In short, the various control functions for a same tool are configured, for example, on the basis of the type of work to be performed and/or the speed to be imparted to the actuator (A1) and/or the degree of experience of the operator, or the like.

The selection of a desired control function may be performed in a known manner by means of a selector, which may be in the form of a control element such as a switch, a knob or the like, or in the form of an electronic interface, which can be activated by a display or the like.

Advantageously, said two or more control functions which can be used for controlling a same tool can only be selected subject to compliance with a safety condition. For example, the safety condition comprises a safety code and/or the recognition of an operator. In this case, it is possible to authorise only specific operators to use certain control functions, for example on the basis of experience or training of each operator.

According to a particularly advantageous embodiment, each control function attributes to the level of the control signal a theoretical speed of movement of the actuator (A1). That attribution can be achieved by the control module (U) due to the fact that, as already highlighted, each flow rate control valve is designed for delivering a flow rate of operator fluid proportional to the level of a control signal. Knowing the flow rate supplied to the actuator (A1), it is possible to calculate the theoretical speed of movement.

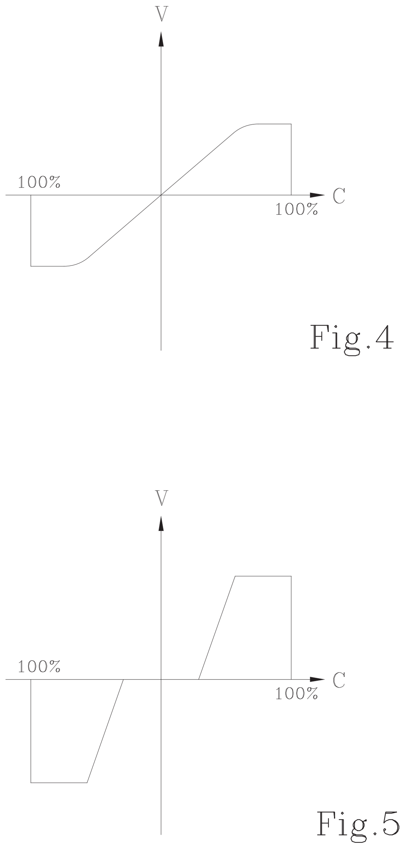

Figures 4 to 9 show some possible embodiments of a control function wherein the level of the control signal ("C" in the X-axis) is associated with the theoretical speed of the actuator (A1) ("V" in the Y-axis).

Figure 4 shows a control function wherein the maximum speed of the actuator (A1), that is, the maximum flow rate dispensed by the flow rate control valve (V1), is reached not at the maximum level of the control signal, but at a lower level.

Figure 5 shows a control function wherein for a certain range of movement of the control device (S) about a central neutral position there is no flow of fluid to the actuator (A1), whilst the maximum flow rate dispensed is obtained not at the maximum level of the control signal, but at a lower level.

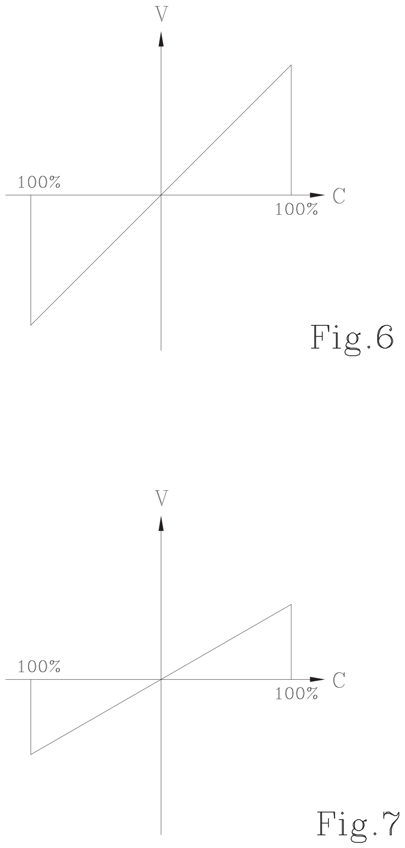

Figures 6 and 7 show linear control functions, with different gradients.

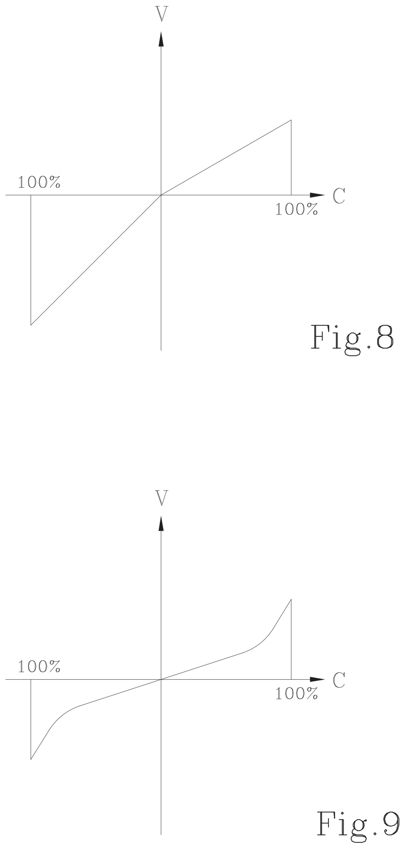

Figure 8 shows a control function in which the gradient of the curve is different in opposite directions of movement of the control device (S).

Figure 9 shows a control function in which, after reaching a predetermined level of the control signal, the gradient of the curve changes.

The speed of movement of the actuator (A1) is theoretical since it is calculated regardless of the operating conditions applied to the actuator (A1), such as, for example, the load, ambient temperature or the like. The operating conditions applied to the actuator (A1), on the other hand, modify the speed of the actuator (A1) foreseen by the control curve used.

In order to compensate for the effect of the operating conditions, the operator unit according to the invention comprises a sensor for detecting and transmitting to the control module (U) the real speed of movement of the actuator (A1). For each control signal, the control module (U) is configured to perform a feedback control which comprises:
comparing the real speed with the theoretical speed;
modifying the control signal in such a way as to reduce or eliminate the difference between the real speed and the theoretical speed.

Thanks to the feedback control performed by the control module (U), each position of the control device (S) always corresponds to the expected speed and foreseen by the specific control function, regardless of the operating conditions of the operator unit. This feature of the operator unit according to the invention considerably facilitates the work of the operators since the response of the actuator (A1), and in particular the speed of the latter, does not depend substantially on the operating conditions of the operator unit, that is to say, it does not depend on the load applied and/or the temperature or other conditions, but only on the position which the operator imparts to the control device (S).

The operator unit may be configured with actuators (A1, A2, A3...) and corresponding control valves (V1, V2, V3...). In that case, the control module (U) is programmed with two or more control functions for some or all the control valves (V1, V2, V3...) present. The features described above for an actuator and for the relative control valve may be replicated for each actuator and each control valve present in the operator unit. If two or more actuators operate simultaneously to perform certain movements or predetermined cycles of operations, the control module (U) coordinates the control signals and the respective levels on the basis of the programmed control functions.

## Claims

1. An operator unit, in particular for an operator vehicle, comprising:
at least one actuator (A1), which can be associated with two or more tools or equipment which are alternative to each other;
a control device (S), which is movable and can be positioned in an operating space;
a control module (U) connected to the control device and to the actuator (A1) and designed to send to the actuator (A1) a control signal whose level is a function of a position adopted by the control device (S) inside said operating space;
**characterised in that:**
the control module (U) is programmed with at least two control functions, each of which relates a position adopted by the control device (S) inside said operating space with a level of the control signal;
said control functions are different mathematical relationships which, for a same position of the control device, generate different signal levels;
the control module (U) is programmed with a control algorithm configured for:
receiving an identification signal which identifies a tool associated with the actuator (A1);
selecting a control function on the basis of said identification signal;
sending to the actuator (A1) a control signal obtained from the selected control function.

2. The operator unit according to claim 1, wherein:
said actuator (A1) is a hydraulic actuator;
a pump (P) is connected to said actuator (A1);
at least one flow rate control valve (V1), with electrical activation, is interposed between the pump (P) and the actuator;
said control module (U) is connected to the control device and to the control valves, and it is designed to send to the flow rate control valve (V1) a control signal the level of which is a function of a position adopted by the control device (S) in said operating space;
said control algorithm with which the control module (U) is programmed is configured for sending to the flow rate control valve (V1) a control signal obtained from the selected control function.

3. The operator unit according to claim 1 or 2, wherein:
for at least one tool which can be associated with the actuator (A1), the control module (U) is programmed with at least two control functions, different to each other, which can be used for controlling said tool;
said control algorithm is configured for selecting one of said two or more control functions on the basis of a predetermined operating parameter.

4. The operator unit according to claim 3, wherein said predetermined operating parameter is a function of at least one of the following parameters:
maximum speed at which to operate the actuator (A1);
maximum acceleration at which to operate the actuator (A1).

5. The operator unit according to claim 3 or 4, wherein said two or more control functions which can be used for controlling the tool can only be selected subject to compliance with a safety condition.

6. The operator unit according to claim 5, wherein said safety condition comprises a safety code and/or the recognition of an operator.

7. The operator unit according to any one of the preceding claims, wherein each control function links the level of the control signal with a theoretical speed (Vt) of movement of the actuator (A1).

8. The operator unit according to claim 7, comprising a sensor (R) for detecting and transmitting to the control module (U) the real speed (Vr) of movement of the actuator (A1), wherein, for each control signal, the control module (U) is configured to operate according to a feedback control strategy which comprises:
comparing the real speed with the theoretical speed;
modifying the control signal in such a way as to reduce or eliminate the difference between the real speed and the theoretical speed.

9. The operator unit according to any one of the preceding claims, comprising two or more actuators (A1, A2, A3...), wherein the control module (U) is programmed with two or more control functions for some or all of the actuators (A1, A2, A3...).

10. The operator unit according to any one of claims 2 to 9, comprising two or more actuators (A1, A2, A3...) connected to respective control valves (V1, V2, V3...), wherein the control module (U) is programmed with two or more control functions for some or all of the control valves (V1, V2, V3...).

11. The operator unit according to claim 9 or 10, wherein two or more actuators operate simultaneously to perform certain movements or certain cycles of operations, and wherein the control module (U) coordinates the control signals and the respective levels on the basis of the control functions with which it is programmed.

12. An operator vehicle, comprising:
a motor (M);
a self-propelled unit (C), equipped with means for moving on the ground and
actuated by the motor (M);
an operator device (B), associated with the self-propelled unit and movable relative to the latter;
an operator unit according to any one of the preceding claims, wherein at least one actuator (A1) is connected to the operator device to allow an actuation.
